# EUROPÄISCHE PATENTANMELDUNG

(11) **EP 0 943 915 A1**
(43) Veröffentlichungstag der Anmeldung: **22.09.1999**
(21) Anmeldenummer: 99810046.5
(22) Anmeldetag: 22.01.1999
(51) Int. Cl.: G01N 25/68

(54) **Vorrichtung zur Bestimmung des Taupunktes und/oder des Wasserdampfgehalts der luft**

(30) Priorität: 16.03.1998 CH 62098
(71) Anmelder: METEOLABOR AG, CH-8620 Wetzikon (CH)
(72) Erfinder: Ruppert, Paul, CH-8620 Wetzikon (CH)
(74) Vertreter: Rottmann, Maximilian R.

(57) **Zusammenfassung**

Eine Vorrichtung zur Bestimmung des Taupunkts und/oder des Wasserdampfgehalts der Luft, insbesondere für den Einsatz in Radiosonden, ist mit einer Taupunktspiegelanordnung versehen, welche eine Lichtquelle (1), einen Reflektor (2), ein thermisch mit dem Reflektor (2) gekoppeltes Kühlelement (4), einen Temperaturfühler (3) zum Erfassen der Reflektortemperatur sowie einen Erfassungssensor (5) zum Empfangen des vom Reflektor (2) reflektierten Lichts umfasst. Der Erfassungssensor (5) ist in einem temperaturstabilisierten Bereich der Vorrichtung angeordnet und über einen Lichtwellenleiter (6) optisch mit dem Reflektor (2) gekoppelt. Die Lichtquelle (1) ist als Glühlampe ausgebildet. Zum Erwärmen des Sensorkopfs (10) ist ein aktives Heizelement (7) vorgesehen. Um die Temperatur des Reflektors (2) genau bestimmen zu können, wird eine Kombination Thermoelement-Reflektor vorgeschlagen, indem das Thermoelement (3) durch zwei flächig miteinander verlötete Metallbleche gebildet wird, wovon das eine Metallblech zur Bildung des Reflektors mit einer Licht reflektierenden Oberfläche versehen ist. Mit einer derartig ausgestalteten Vorrichtung lässt sich der Taupunkt und/oder der Wasserdampfgehalt der Luft sehr genau bestimmen.

## Beschreibung

Die Erfindung betrifft eine Vorrichtung zur Bestimmung des Taupunkts und/oder des Wasserdampfgehalts der Luft.

Um den Wasserdampf in der freien Atmosphäre zu messen, werden heute routine-mässig ballongetragene Radiosonden eingesetzt. Dabei kommen oft Adsorptions-Feuchtefühler zum Einsatz, die mit einem hygroskopischen Kunststoffilm arbeiten. Die Messungen geben vernünftige Resultate zwischen plus 50°C und minus 35°C. Unterhalb von minus 35°C, d.h. je nach Wetterlage und geographischer Breite oberhalb von ca. 7 Km Höhe, sind die Messungen unsicher oder unbrauchbar, weil die Sensoren nicht mehr reagieren. Der Grund für die Grenze der Messleistung liegt in der Physik des Adsorptions-Messverfahrens.

Aus diesem Grunde werden heute vermehrt Taupunktspiegel eingesetzt. Das Messverfahren ist einfach und sehr gut definiert: Ein Spiegel wird der zu messenden Luft ausgesetzt und mittels eines Kühlelements gekühlt, bis er beschlägt, d.h. bis sich ein Kondensat aus Wasser -oder bei tiefen Temperaturen aus Eis- auf seiner Oberfläche bildet. Nun wird die Temperatur des Spiegels so geregelt, dass die Kondensatschicht stabil bleibt, d.h. es verdampft nichts und es bildet sich auch kein neues Kondensat. In diesem Gleichgewichtszustand hat die Spiegeloberfläche die Wasserdampf-Sättigungstemperatur. Diese wir von einem im Spiegel eingebauten Thermometer gemessen. Aus der Taupunkttemperatur und der ebenfalls gemessenen Lufttemperatur kann nun die relative Feuchtigkeit der Luft bestimmt werden.

Bei den bekannten Taupunktspiegel-Messgeräten wird das Reflexionsverhalten des Spiegels mittels einer Optoelektronik kontrolliert. Dazu wird der Spiegel mittels einer Lichtquelle unter einem Winkel von 45° beleuchtet. Als Lichtquelle wird bei den bekannten Vorrichtungen eine Halbleiterlichtquelle in Form einer Leuchtdiode (LED) verwendet. Gegenüber empfängt ein ebenfalls unter einem Winkel von 45° zur Spiegelfläche angeordneter Phototransistor das vom Spiegel reflektierte Licht. Wenn sich Kondensat auf dem Spiegel bildet, wird ein Teil des Lichts an den Wassertröpfchen oder Eiskristallen nach allen Richtungen gestreut. Es wird deshalb weniger Licht auf den Phototransistor reflektiert. Das elektrische Signal des Phototransistors dient als Istwert in einem Regelsystem, das den Strom im Kühlelement des Spiegels steuert und so die Reflexion des Spiegels stabil hält.

Mit derartig ausgebildeten Taupunktspiegel-Messgeräten können in einem Temperaturbereich zwischen plus 50°C und minus 40°C im allgemeinen genaue Messungen gemacht werden. Bei Temperaturen von unter minus 40°C und insbesondere bei geringen Luftfeuchtigkeiten, bei denen eine grosse Differenz zwischen der Luft- und der Taupunkttemperatur besteht, wird jedoch mit den herkömmlichen, bis anhin in Radiosonden eingesetzten Taupunktspiegel-Messgeräten ein Grenze erreicht, bei der die Messgenauigkeit zu wünschen übrig lässt oder deren Funktion nicht mehr gewährleistet ist.

Dies ist damit erklärbar, dass der Erfassungssensor, wie auch die meisten der übrigen, elektronischen Bauteile, bei Temperaturen von unter minus 40°C nicht mehr spezifiziert sind. Um diesem Problem zu begegnen, sind Vorrichtungen bekannt, welche mit einem temperaturstabilisierten Bereich zur Aufnahme der temperaturempfindlichen Komponenten versehen sind. Allerdings können nicht alle temperaturempfindlichen Komponenten in diesem temperaturstabilisierten Bereich angeordnet werden, da einige der Komponenten, namentlich die Lichtquelle und der Erfassungssensor, zwangsläufig mit der Umgebungsluft in Berührung kommen bzw. kommen müssen, so dass auch durch diese Verbesserungen die gewünschte Messgenauigkeit nicht erreicht werden kann.

Obwohl Laborausführungen von Taupunktspiegel-Messgeräten bekannt sind, mit welchen auch bei Temperaturen von unter minus 40°C zufriedenstellende Messergebnisse erzielt werden können, eignen sich diese nicht für den Einsatz in Radiosonden, da solche Taupunktspiegel-Messgeräte sehr teuer sind, mehrere Kilogramm wiegen und elektrische Leistungen von 100 Watt und mehr benötigen. Durch das hohe Gewicht und die grosse Leistungsaufnahme können sie keinesfalls in Radiosonden verwendet werden, da die Tragfähigkeit von herkömmlichen Radiosonden-Trägerballonen beschränkt ist.

Es ist daher die Aufgabe der Erfindung, eine Vorrichtung der im Oberbegriff des Anspruchs 1 genannten Art derart zu verbessern, dass diese bei günstigen Herstellungskosten, geringem Gewicht und geringer Leistungsaufnahme eine genaue Bestimmung des Taupunkts und/oder der Wasserdampfgehalts der Luft, insbesondere auch bei tiefen Umgebungstemperaturen, ermöglicht.

Diese Aufgabe wird durch die im Kennzeichen des Anspruchs 1 angeführten Merkmale gelöst.

Bevorzugte Ausführungsbeispiele der Erfindung sind in den abhängigen Ansprüchen 2 bis 15 definiert.

Um die Temperatur des Reflektors genauer als bisher bestimmen zu können, wird im Anspruch 6 eine bevorzugte Ausführungsform eines Temperaturfühlers in Form eines Thermoelements vorgeschlagen.

Durch die vorgeschlagene Ausbildung des Temperaturfühlers können parasitäre Wärmeflüsse durch das Thermometer vermieden werden. Parasitäre Wärmeflüsse durch das Thermometer entstehen insbesondere dann, wenn der Spiegel sehr klein ist und die Spiegeltemperatur markant tiefer ist als die Umgebungstemperatur. Durch die Kombination Reflektor-Thermoelement können die geschilderten Probleme weitestgehend vermieden werden und die Temperatur des Spiegels kann genauer bestimmt werden.

Schliesslich wird im Anspruch 10 vorgeschlagen, dass im Sensorkopf ein in Abhängigkeit des Luftdrucks und der Strömungsgeschwindigkeit der durchströmenden Luft den Durchlassquerschnitt für die durchströmende Luft veränderndes Element angeordnet ist. Durch das Vorsehen eines solchen Elements kann die Vorrichtung konstruktiv so ausgelegt werden, dass der Wärmeübergang zwischen dem Sensorkopfgehäuse und der Umgebung innerhalb bestimmter Grenzen bleibt, auch wenn sich der Luftdruck und die Strömungsgeschwindigkeit ändert. Eine solches Element bringt insbesondere beim Einsatz der Vorrichtung in Radiosonden grosse Vorteile, da eine Radiosonde bei ihrem Aufstieg in 35 Km Höhe einen Luftdruckbereich zwischen 1000 hPa und 5 hPa durchfliegt. Dabei soll die Wärmeabfuhr des geheizten Sensorkopfs in geringen Höhen nicht zu gross sein und in grossen Höhen soll eine genügende Wärmeabfuhr von der Warmseite des ebenfalls im Sondenkopf angeordneten Kühlelements sichergestellt werden.

Eine weitere Aufgabe der Erfindung besteht darin, ein Verfahren vorzuschlagen, mittels welchem übersättigte und/oder mit Wassertröpfchen oder Eiskristallen versehene Luft erkannt wird.

Diese Aufgabe wird durch die im Kennzeichen des Anspruchs 16 angeführten Verfahrensschritte gelöst.

Im Anspruch 17 wird schliesslich ein bevorzugtes Verfahren umschrieben, mittels welchem die in einem bestimmten Luftvolumen vorhandene Wassermenge oder die Menge an Eiskristallen ermittelt werden kann.

Nachfolgend wird ein Ausführungsbeispiel einer erfindungsgemässen Vorrichtung, welche sich insbesondere für den Einsatz in Radiosonden eignet, anhand von Zeichnungen näher erläutert. In diesen Zeichnungen zeigt:
Fig. 1 ein Blockschema der Vorrichtung;
Fig. 2 eine Taupunktspiegelanordnung in schematischer Darstellung;
Fig. 3 einen Querschnitt durch einen schematisch dargestellten Sensorkopf;
Fig. 4 eine Detailansicht eines Reflektor-Thermoelements;
Fig. 5 einen Infrarot-Radiator, und
Fig. 5a eine alternative Ausführungsform des Infrarot-Radiators.

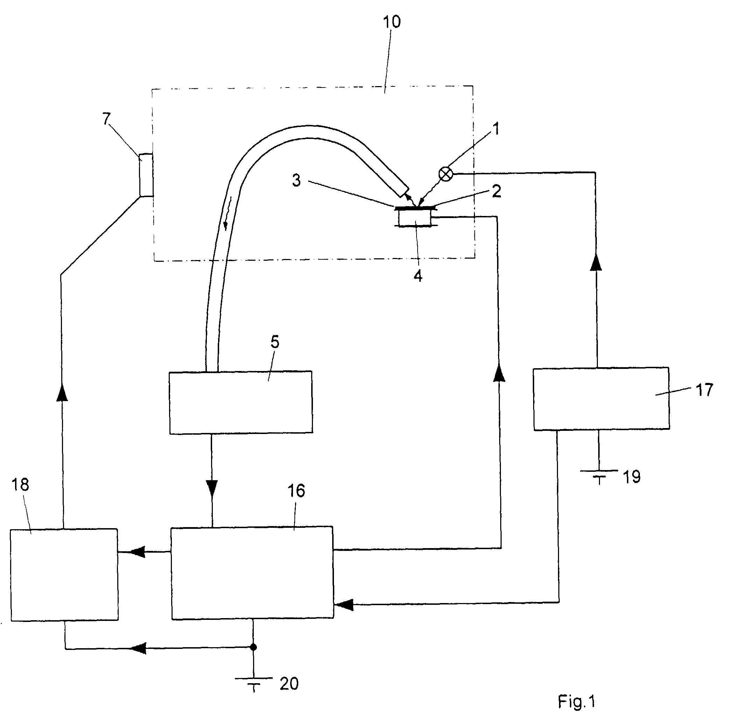

Anhand der Figur 1 soll der Aufbau und die Wirkungsweise der Vorrichtung näher erläutert werden. Die Vorrichtung weist eine Taupunktspiegelanordnung auf, welche im wesentlichen aus einer Lichtquelle 1, einem Reflektor 2, einem Temperaturfühler 3, einem Kühlelement 4, einem Erfassungssensor 5 sowie einem elektronischen Regler 16 besteht. Die Lichtquelle 1 ist zusammen mit dem Reflektor 2 und dem Temperaturfühler 3 in einem Sensorkopf 10 aufgenommen. Ausserdem ist ein Lichtwellenleiter 6 vorgesehen, der in den Sensorkopf 10 hineingeführt ist und den Erfassungssensor 5 optisch mit dem Reflektor 2 koppelt. Um den Sensorkopf 10 erwärmen zu können, ist ein Heizelement 7 vorgesehen. Im weiteren sind ein Spannungs-Stabilisator 17 sowie ein Heizregler 18 vorgesehen, welche zusammen mit dem Erfassungssensor 5 und dem elektronischen Regler 16 in einem temperaturstabilisierten Bereich der Vorrichtung angeordnet sind. Der temperaturstabilisierte Bereich wird durch ein wärmeisoliertes Gehäuse gebildet, in welchem ein Wärmespeicher, beispielsweise in Form eines Wasserbeutels, aufgenommen ist. Schliesslich sind zur Speisung der Vorrichtung zwei Batterien 19, 20 vorgesehen.

Da die prinzipielle Wirkungsweise von Taupunktspiegeln sowie Taupunkthygrometern bekannt ist, wird nachfolgend nur auf die im Zusammenhang mit der Erfindung wesentlichen Bestandteile und deren Wirkungsweise eingegangen, wobei der zweite, zur Bestimmung der relativen Feuchtigkeit der Luft notwendige Temperaturfühler nicht eingezeichnet ist.

Als Lichtquelle 1 ist eine Glühlampe vorgesehen, welche den Reflektor 2 unter einem Winkel von 45° beleuchtet. Das vom Reflektor 2 reflektierte Licht wird über den ebenfalls unter einem Winkel von 45° zum Reflektor 2 angeordneten Lichtleiter 6 empfangen und dem Erfassungssensor 5 zugeführt. Die Reflektortemperatur wird über ein Thermoelement 3 gemessen. Zur Regelung der Temperatur des als Peltierzelle ausgebildeten Kühlelements 4, und damit der Reflektortemperatur, dient der elektronische Regler 16. Schliesslich ist am Sensorkopfgehäuse 10 das Heizelement 7 in Form eines Transistors angebracht, mittels welchem das Sensorkopfgehäuse 10 bei Bedarf erwärmt werden kann. Die Ansteuerung des Transistors 7 erfolgt über einen Heizregler 18, welcher diesen in Abhängigkeit der Kühlleistung des Kühlelements 4 aktiviert. Geht die Kühlleistung gegen null, so nähert sich die Taupunkttemperatur der Lufttemperatur, wodurch bei positiven Temperaturen die Gefahr besteht, dass sich auf der Oberfläche des Sensorkopfs 10 Wasser niederschlägt. In diesem Fall funktioniert der Taupunktspiegel nicht mehr. Daher wird das Heizelement 7 des Sensorkopfs 10 aktiviert, sobald die Differenz zwischen der Taupunkt- und der Lufttemperatur einen bestimmten Wert unterschreitet. Auf diese Weise kann eine Benetzung der Reflektoroberfläche zuverlässig verhindert werden. Eine Heizung des Sensorkopfs 10 bietet jedoch noch zusätzliche Möglichkeiten, da dadurch beispielsweise Wolken detektiert werden können: Wenn auf dem Reflektor 2 eine Temperatur gemessen wird, die höher ist als die Lufttemperatur, so bedeutet dies, dass in der Luft Wassertröpfchen oder Eiskristalle vorhanden sind und dass die Radiosonde demzufolge eine Wolke durchquert. Die Erklärung hierfür liegt in der Tatsache, dass die Luft im geheizten Sensorkopf 10 erwärmt wird und deren absoluter Feuchtigkeitsgehalt durch die Temperaturzunahme steigt, sofern in der Luft Wassertröpfchen oder Eiskristalle vorhanden sind und verdampft wurden. In diesem Fall ist die gemessene Taupunkttemperatur höher als die Lufttemperatur. Aufgrund der Differenz zwischen der Lufttemperatur und der Taupunkttemperatur kann zudem eine quantitative Aussage bezüglich des Wassergehalts der Luft gemacht werden. Durch das Vorsehen einer Heizung 7 im Sensorkopf 10 können daher erstmals Wolken erkannt und deren Wassergehalt in flüssiger oder fester Form bestimmt werden.

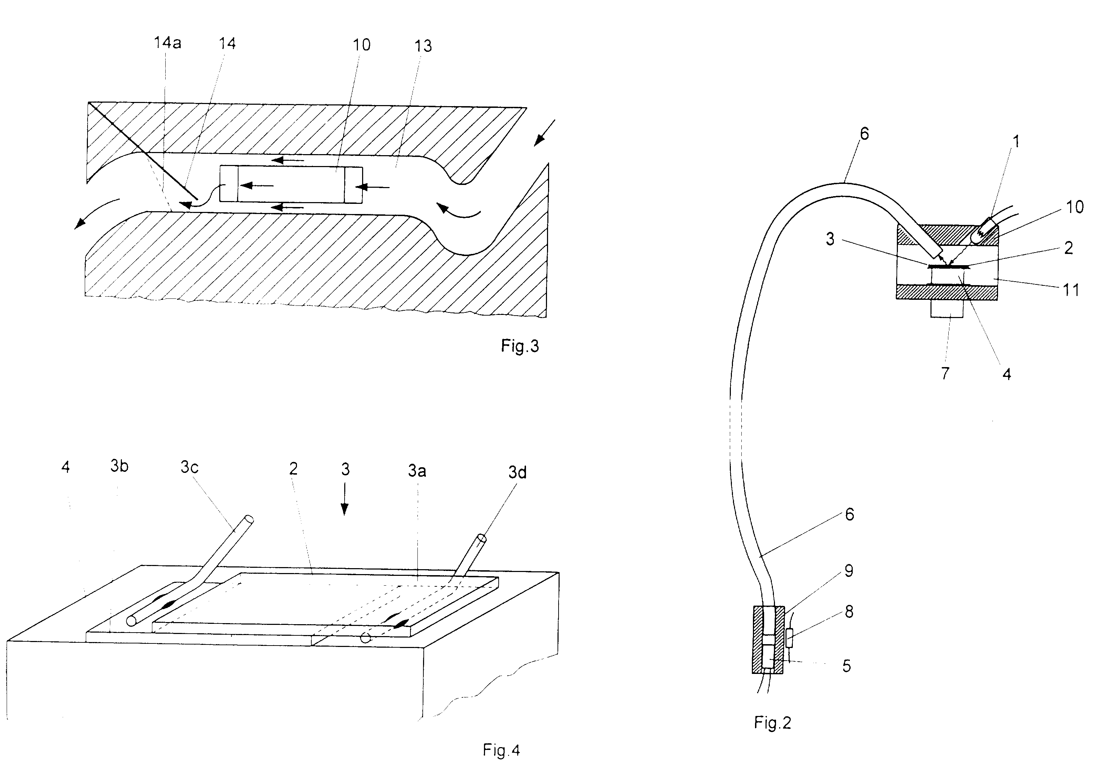

Fig. 2 zeigt die Taupunktspiegelanordnung in schematischer Darstellung. Aus dieser Darstellung ist ersichtlich, dass die Peltierzelle 4 zusammen mit dem Thermoelement 3 und dem Reflektor 2 in einem Strömungskanal 11 des Sensorkopfs 10 angeordnet sind. Das Thermoelement 3 selber wird durch zwei flächig miteinander verlötete Metallbleche aus Kupfer und Konstantan gebildet. Das Konstantanblech ist auf der freien Oberfläche zur Bildung des Reflektors 3 vergoldet, währenddem das Kupferblech mit der Kaltseite der Peltierzelle verklebt ist. Die detaillierte Ausbildung des Thermoelements wird anschliessend anhand der Fig. 4 noch näher erläutert. Die Glühlampe 1 ist ebenso wie der empfangsseitige Anfang des Lichtleiters 6 in der Wandung des Sensorkopfs 10 aufgenommen. Auf der Unterseite des Sensorkopfs 10 ist der als Heizelement wirkende Transistor 7 angeordnet.

Am Ende des Lichtleiters 6 ist der Erfassungssensor 5 in einem Gehäuse 9 aufgenommen, wobei im vorliegenden Fall ein Phototransistor 5 als Erfassungssensor verwendet wird. Zur Temperaturkompensation von auftretenden Temperaturschwankungen ist ein Thermistor 8 vorgesehen.

Die Verwendung einer Glühlampe 1 als Lichtquelle bringt den Vorteil mit sich, dass sich deren Emissionsverhalten durch auftretende Temperaturänderungen -ganz im Gegensatz zu Halbleiterlichtquellen- praktisch nicht ändert.

Fig. 3 zeigt einen Querschnitt durch einen schematisch dargestellten Luftkanalabschnitt 13 der Vorrichtung, in welchem der Sensorkopf aufgenommen ist. In Strömungsrichtung der Luft gesehen ist hinter dem Sensorkopf 10 ein Ventilblech 14 angeordnet, welches unter Federvorspannung steht. Das Ventilblech 14 bewegt sich mit der Luftströmung so, dass bei hohem Druck, also in geringen Höhen, der Durchlassquerschnitt des Luftkanals 13 kleiner ist als bei geringem Druck in entsprechend grossen Höhen. Da die Steigrate einer Radiosonde während dem Aufstieg relativ konstant ist, wodurch auch die Strömungsgeschwindigkeit der durch den Luftkanalabschnitt 13 strömenden Luft gleichmässig hoch ist, wird die Auslenkung des Ventilblechs 14 praktisch nur durch den Luftdruck beeinflusst. Durch die gestrichelt eingezeichnete Linie 14a ist die Auslenkung des Ventilblechs bei hohem Druck angedeutet.

Fig. 4 zeigt eine Detailansicht des Thermoelements 3, welches gleichzeitig als Reflektor ausgebildet ist. Wie bereits vorgängig erläutert, besteht das Thermoelement 3 aus zwei flächig miteinander verlöteten Metallblechen 3a, 3b, wobei das untere Blech 3b aus Kupfer und das obere Blech 3a aus Konstantan besteht. Die beiden einander nur teilweise überlappenden Metallbleche 3a, 3b sind im überlappenden Bereich miteinander verlötet. In dem nicht überlappenden Bereich des unteren Kupferblechs 3b ist ein ebenfalls aus Kupfer bestehender Anschlussdraht 3c angeschweisst, währenddem am oberen, aus Konstantan bestehenden Blech 3a ein ebenfalls aus Konstantan bestehender Anschlussdraht 3d angeschweisst ist. Die Thermospannung entsteht im Innern des Thermoelements an der Lötstelle der beiden Bleche 3a, 3b. Das Konstantanblech 3a ist auf der freien Oberfläche 2 zur Bildung des Reflektors vergoldet, währenddem das Kupferblech 3b mit der Kaltseite der Peltierzelle 4 verklebt ist. Die Grösse der beiden Bleche 3a, 3b beträgt in der Praxis lediglich einige Millimeter.

Eine derartige Konstruktion ergibt nahezu ideale thermodynamische Verhältnisse für die Temperaturmessung, indem parasitäre Wärmeflüsse, die insbesondere durch die Drahtanschlüsse in den Spiegel (Reflektor) gelangen, weitestgehend eliminiert werden können und im vorliegenden Fall praktisch ohne Einfluss auf die Genauigkeit der Temperaturmessung sind.

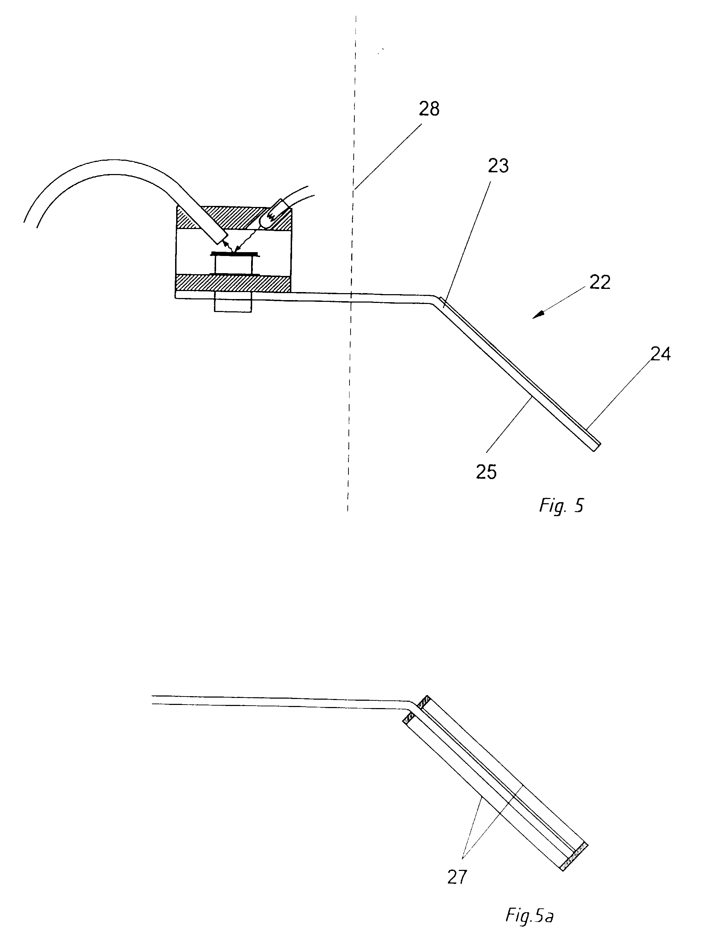

Da sich in grossen Höhen die maximal erreichbare Taupunktspiegel-Temperaturdepression wegen der temperaturabhängigen Kennlinie des Kühlelements 4 und wegen der schlechteren Wärmeabfuhr der Warmseite des Kühlelements 4 reduziert, können kleine relative Feuchtigkeiten mit den herkömmlichen Taupunktspiegelanordnungen ab einer bestimmten Höhe nicht mehr bzw. nicht mehr genügend genau gemessen werden. Gerade in der Stratosphäre sind die Feuchtigkeiten jedoch klein. Diesem Problem kann zumindest bei Nachtflügen mit einem Infrarot-Radiator 22 begegnet werden, wie er in den Fig. 5 und 5a gezeigt ist. Dieser Infrarot-Radiator 22 besteht aus einem abgewinkelten Metallblech 23, das eine schwarz gefärbte Oberseite 24 und eine polierte Unterseite 25 aufweist. Das Metallblech 23 steht in thermischer Verbindung mit der Warmeiste des Kühlelements. Der Infrarot-Radiator 22 ragt seitlich aus dem Gehäuse der Radiosonde, wobei die Wand des Sensorgehäuses 28 schematisch dargestellt ist. Um den Einfluss der Konvektion auf den Infrarot-Radiator 22 zu reduzieren, kann die Ober- und Unterseite des Infrarot-Radiators 22 gemäss der Fig. 5a zusätzlich mit einer infrarotdurchlässigen Kunststofffolie thermisch isoliert werden.

Mit der geschilderten Ausführungsform eines Infrarot-Radiators 22 braucht die von der Warmseite des Kühlelements 4 abzuführende Wärme nicht mehr ausschliesslich durch Konvektion an die Umgebungsluft abgegeben zu werden, da der Infrarot-Radiator 22 im langwelligen Bereich Energie von seiner Oberseite 24 in den Weltraum abstrahlt. Wenn jeweils von Ober- und Unterseite gesprochen wird, so ist mit Oberseite die dem Weltraum zugewandte Seite und mit Unterseite die der Erde zugewandte Seite des Radiators 22 zu verstehen. Um den Infrarot-Radiator 22 zwischen einer Ruhe- und einer Wirkstellung verschwenken zu können, könnte beispielsweise ein Scharnier (nicht eingezeichnet) vorgesehen werden. Für eine Tagsondierung wird der Infrarot-Radiator 22 dann vorzugsweise in die Ruhestellung verschwenkt, in welcher er sich innerhalb des Sensorgehäuses befindet, währenddem er für Nachtsondierungen in die Wirkstellung ausserhalb des Sensorgehäuses verschwenkt wird.

Zusammenfassend kann festgehalten werden, dass durch die Anordnung des Erfassungssensors in einem temperaturstabilisierten Bereich der Vorrichtung zusammen mit einem zwischen dem Reflektor und dem Erfassungssensor angeordneten Lichtwellenleiter die Messgenauigkeit erhöht wird, da sich die Temperatur des Erfassungssensors auch bei sehr tiefen Umgebungstemperaturen nur unwesentlich ändert und der Erfassungssensor daher innerhalb seiner Spezifikationen betrieben werden kann. Durch den Einsatz einer Glühlampe anstelle der bisher verwendeten LED's wird die Lichtemission der Lichtquelle auch bei Temperaturänderungen von bis zu 100 Kelvin praktisch nicht beeinflusst, so dass die Glühlampe auch weiterhin direkt im Sensorkopf eingebaut werden kann. Durch die Kombination Thermoelement-Reflektor wird die Genauigkeit der Temperaturmessung erhöht, indem parasitäre Wärmeflüsse praktisch eliminiert werden können. Ausserdem kann der Reflektor sehr klein gebaut werden. Schliesslich kann durch ein unter Federwirkung stehendes Element, welches den Durchlassquerschnitt mit abnehmenden Luftdruck und sinkender Strömungsgeschwindigkeit der durchströmenden Luft vergrössert, sichergestellt werden, dass der Wärmeübergang zwischen dem Sensorkopfgehäuse und der Umgebung innerhalb bestimmter Grenzen bleibt, auch wenn sich der Luftdruck stark ändert.

Natürlich könnte anstelle einer im Sensorkopf angeordneten Glühlampe, welche dem vollen Temperaturbereich der Umgebung ausgesetzt ist, auch die Lichtquelle im temperaturstabilisierten Bereich der Vorrichtung angeordnet werden. Dies würde jedoch bedeuten, dass ein zweiter Lichtleiter vorgesehen werden müsste, was den Lichtverlust erhöhen würde.

Nebst einer erhöhten Messgenauigkeit werden auch die übrigen, insbesondere für den Einsatz in Radiosonden wichtigen Anforderungen, nämlich tiefe Herstellungskosten, geringes Gewicht und eine geringe elektrische Leistungsaufnahme mit der erfindungsgemässen Vorrichtung erfüllt.

Bezüglich des vorgängig erläuterten Ausführungsbeispiels ist anzufügen, dass dieses lediglich eine mögliche Ausführungsform darstellt und dass im Rahmen des in den Patentansprüchen definierten Schutzumfangs durchaus von vorgängigem Ausführungsbeispiel abweichende Ausführungen von Vorrichtungen zur Bestimmung des Taupunkts und/oder des Wasserdampfgehalts der Luft möglich sind.

## Patentansprüche

1. Vorrichtung zur Bestimmung des Taupunkts und/oder des Wasserdampfgehalts der Luft, insbesondere für den Einsatz in Radiosonden, mit einer Taupunktspiegelanordnung, welche eine Lichtquelle (1), einen Reflektor (2), ein thermisch mit dem Reflektor (2) gekoppeltes Kühlelement (4), einen Temperaturfühler (3) zum Erfassen der Reflektortemperatur sowie einen Erfassungssensor (5) zum Empfangen des vom Reflektor (2) reflektierten Lichts umfasst, wobei die Vorrichtung einen temperaturstabilisierten Bereich zur Aufnahme von temperaturempfindlichen Komponenten aufweist, **dadurch gekennzeichnet,** dass der Erfassungssensor (5) im temperaturstabilisierten Bereich der Vorrichtung angeordnet ist und dass der Erfassungssensor (5) über einen Lichtwellenleiter (6) optisch mit dem Reflektor (2) gekoppelt ist.

2. Vorrichtung nach Anspruch 1, dadurch gekennzeichnet, dass die Lichtquelle (1) als Glühlampe ausgebildet ist.

3. Vorrichtung nach Anspruch 1 oder 2, dadurch gekennzeichnet, dass die Vorrichtung einen von der Umgebungsluft durchströmten Sensorkopf (10) aufweist, in dem zumindest der Reflektor (2) angeordnet ist und dass ein aktives Heizelement (7) zum Erwärmen des Sensorkopfs (10) und/oder der durch den Sensorkopf (10) strömenden Umgebungsluft vorgesehen ist.

4. Vorrichtung nach Anspruch 3, dadurch gekennzeichnet, dass zur Aktivierung des Heizelements (7) ein Heizregler (18) vorgesehen ist, welcher das Heizelement (7) in Abhängigkeit der Kühlleistung des Kühlelements (4) aktiviert.

5. Vorrichtung nach einem der vorhergehenden Ansprüche, dadurch gekennzeichnet, dass als Temperaturfühler (3) ein Thermoelement vorgesehen ist.

6. Vorrichtung nach Anspruch 5, dadurch gekennzeichnet, dass zur Bildung des Thermoelements (3) zwei flächig miteinander verlötete Metallbleche (3a, 3b) vorgesehen sind wovon das eine Metallblech (3a) zur Bildung des Reflektors (2) mit einer Licht reflektierenden Oberfläche versehen ist.

7. Vorrichtung nach Anspruch 6, dadurch gekennzeichnet, dass die beiden Metallbleche (3a, 3b) nur auf einem Teil ihrer Oberfläche miteinander verlötet sind, wobei in dem nicht verlöteten Bereich des ersten Metallblechs (3a) ein aus dem gleichen Metall bestehender erster Anschlussdraht (3d) angeschweisst ist und wobei in dem nicht verlöteten Bereich des zweiten Metallblechs (3b) ein aus dem gleichen Metall bestehender zweiter Anschlussdraht (3c) angeschweisst ist.

8. Vorrichtung nach Anspruch 6 oder 7, dadurch gekennzeichnet, dass das Thermoelement (3) mit dem Kühlelement (4) verklebt ist.

9. Vorrichtung nach einem der vorhergehenden Ansprüche, dadurch gekennzeichnet, dass das Kühlelement (4) als Peltierzelle ausgebildet ist.

10. Vorrichtung nach einem der Ansprüche 3 bis 9, dadurch gekennzeichnet, dass im Sensorkopf (10) ein in Abhängigkeit des Luftdrucks und der Strömungsgeschwindigkeit der durchströmenden Luft den Durchlassquerschnitt für die durchströmende Luft veränderndes Element (14) angeordnet ist.

11. Vorrichtung nach Anspruch 10, dadurch gekennzeichnet, dass als Element (14) ein unter Federwirkung stehendes Blech vorgesehen ist, welches den Durchlassquerschnitt mit abnehmenden Luftdruck und sinkender Strömungsgeschwindigkeit der durchströmenden Luft vergrössert.

12. Vorrichtung nach einem der vorhergehenden Ansprüche, dadurch gekennzeichnet, dass ein thermisch mit der Warmseite des Kühlelements (4) verbundener Infrarotradiator (22) vorgesehen ist, welcher ausserhalb des temperaturstabilisierten Bereichs der Vorrichtung angeordnet ist.

13. Vorrichtung nach Anspruch 12, dadurch gekennzeichnet, dass der Infrarotradiator (22) eine gefärbte, vorzugsweise eine schwarze Oberseite (24) und eine reflektierende, vorzugsweise eine polierte Unterseite (25) aufweist.

14. Vorrichtung nach Anspruch 12 oder 13, dadurch gekennzeichnet, dass die Ober- und Unterseite (24, 25) des Infrarotradiators (22) mit einer infrarotdurchlässigen, thermischen Isolationsschicht (27) versehen ist.

15. Vorrichtung nach einem der Ansprüche 12 bis 14, dadurch gekennzeichnet, dass der Infrarotradiator (22) zwischen einer Wirk-und einer Ruhestellung bewegbar ist.

16. Verfahren zur Erkennung von übersättigter und/oder mit Wassertröpfchen oder Eiskristallen versehener Luft, mit einer nach einem der Ansprüche 3 bis 15 ausgebildeten Vorrichtung, wobei die Vorrichtung einen zweiten Temperaturfühler zum Erfassen der Umgebungslufltemperatur aufweist, **dadurch gekennzeichnet,** dass die Luft im Sensorkopf (10) erwärmt wird, um Wassertröpfchen oder Eiskristalle zu Verdampfen, dass die Umgebungslufltemperatur von der Taupunkttemperatur subtrahiert wird und dass aufgrund einer Differenz mit positivem Vorzeichen auf Übersättigung der Luft bzw. auf das Vorhandensein von Wasser in flüssiger oder fester Form erkannt wird.

17. Verfahren nach Anspruch 16, dadurch gekennzeichnet, dass aufgrund der errechneten Differenz die in einem bestimmten Luftvolumen vorhandene Menge an flüssigem oder festem Wasser ermittelt wird.
